# FASCICULE DE BREVET EUROPEEN

(11) **EP 0 322 066 B1**
(45) Date de publication et mention de la délivrance du brevet: **28.04.1993**
(21) Numéro de dépôt: 88202954.9
(22) Date de dépôt: 19.12.1988
(51) Int. Cl.: G06F 13/18

(54) **Système de gestion des priorités d'accès à une mémoire et son application**
System für Speicherzugriffsvorrangsteuerung und Anwendung davon
Memory access priority control system and use thereof

(30) Priorité: 23.12.1987 FR 8718043
(43) Date de publication de la demande: 28.06.1989
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Callemyn, Jean-Michel, F-75007 Paris (FR)
(74) Mandataire: Charpail, François

(56) Documents cités:
- FR-A- 2 231 050
- FR-A- 2 593 304
- GB-A- 1 269 301
- US-A- 4 104 624
- ELECTRONIC DESIGN, vol. 34, no. 22, 18 septembre 1986, pages 138-141, Hasbrouck Heights, New Jersey, US; N. SIDDIQUE: "100-MHz DRAM controller sparks multiprocessor designs"

## Description

La présente invention a pour objet un système de gestion des priorités d'accès à une mémoire comportant au moins un module demandeur pourvu de moyens pour émettre des demandes d'accès, un module d'arbitrage pour arbitrer entre les dites demandes d'accès et ainsi élire une demande d'accès à exécuter en priorité.

Un tel système est bien connu dans l'industrie de l'informatique où il est fréquent que les ressources d'une mémoire soient partagées entre plusieurs demandeurs; les demandeurs formulent des demandes d'accès qui peuvent être simultanées alors que leurs exécutions ne sauraient l'être.

Un tel système trouve notamment son application dans un système graphique comportant une mémoire vive dynamique DRAM mémorisant des pixels.

Un système logique de priorité connu est décrit dans la demande de brevet français n^{o}2 593 304; dans un tel système chaque module demandeur émet successivement des demandes d'accès, chaque demande d'accès ayant une priorité unique mais variable dans le temps notamment en fonction de la durée de la demande telle que détectée par le dit module d'arbitrage.

Le module d'arbitrage ainsi décrit est complexe tant au niveau de sa fabrication, et donc de son coût, qu'au niveau de sa mise en oeuvre car une même demande y est pourvue d'une priorité variable dont il n'est pas simple de connaître l'impact sur les performances du système.

On connaît également le document GB-1 269 301 qui décrit un système numérique de traitement de données opérant une gestion des priorités d'accès à une mémoire par différentes unités requérantes. Une telle unité est susceptible d'émettre une requête d'accès à basse priorité et une requête d'accès à haute priorité sur des connexions différentes. Un interpréteur de priorité d'accès détermine la requête qui doit être satisfaite. Mais ce document ne prend pas en compte le contenu de l'information à transmettre.

La présente invention a pour but de supprimer cet inconvénient; elle est definie dans la revendication 1.

Ainsi un pré-arbitrage est effectué et le deuxième module d'arbitrage peut opérer d'autant plus vite ce qui est favorable dans le cas de lecture en rafale de pixels à afficher.

Ainsi chaque type de demande est formulée séparément et une priorité peut être affectée à chaque type selon qu'il s'agit du type à un seul mot ou du type à plusieurs mots. Le module d'arbitrage est plus simple à réaliser car il ne comporte plus de détecteur de bloc ainsi que décrit dans la demande de brevet déjà citée.

La présente invention peut être mise en oeuvre avantageusement soit avec des priorités programmées c'est à dire modifiables pendant le fonctionnement du système, soit avec des priorités pré-programmées, ou cablées, c'est à dire non-modifiables pendant le fonctionnement du système.

Dans le cas où les priorités sont cablées, il est ainsi possible de faire intervenir un signal extérieur d'horloge pour automatiser la gestion des priorités.

Dans un mode préféré, le module d'arbitrage comporte d'une part un premier module pour arbitrer les demandes d'accès à un seul mot et ainsi pré-sélectionner une telle demande et d'autre part un deuxième module pour arbitrer entre la dite demande pré-sélectionnée et des demandes d'accès à plusieurs mots et ainsi élire une demande d'accès à exécuter.

Dans le cas d'une mémoire DRAM comme susdit, les demandes de rafraîchissement peuvent avantageusement être arbitrées par le dit deuxième module.

La présente invention sera mieux comprise avec la description de divers modes de réalisation exposés avec références aux dessins annexés.

Les figures 1a et 1b représentent deux modes d'implémentation.

La figure 2 représente le découpage du module d'arbitrage.

La figure 3 représente l'application de l'invention à un système graphique.

La figure 1a représente un système logique de priorité similaire à celui de la demande de brevet déjà citée et ici incluse par référence pour ne pas alourdir la présente description.

La différence essentielle réside dans le fait que chaque module demandeur comporte deux connexions de requête pour formuler d'une part les requêtes d'accès à un seul mot (DP.REQ1, GP.REQ-1, etc...), et d'autre part les requêtes d'accès à plusieurs mots, ou par blocs (DP.REQ-N, GP.REQN,etc...). Si un module n'émet qu'un seul type de requête, une seule connexion est suffisante (CPU-REQ-1). Le circuit logique de priorité (CLP) comporte autant de registres (REGA, REGB,...REGI) qu'il y a d'entrées de requêtes; ces registres fonctionnent comme dans la demande de brevet déjà citée mais ils ne sont évidemment pas dédoublés et une seule valeur de priorité est affectée à chaque connexion en entrée; cette valeur peut être, comme précédemment, modifiée par une commande (VAL-REG) même pendant le fonctionnement du système; en fonction des priorités, une requête à exécuter (REQ.EX) est sélectionnée par le système.

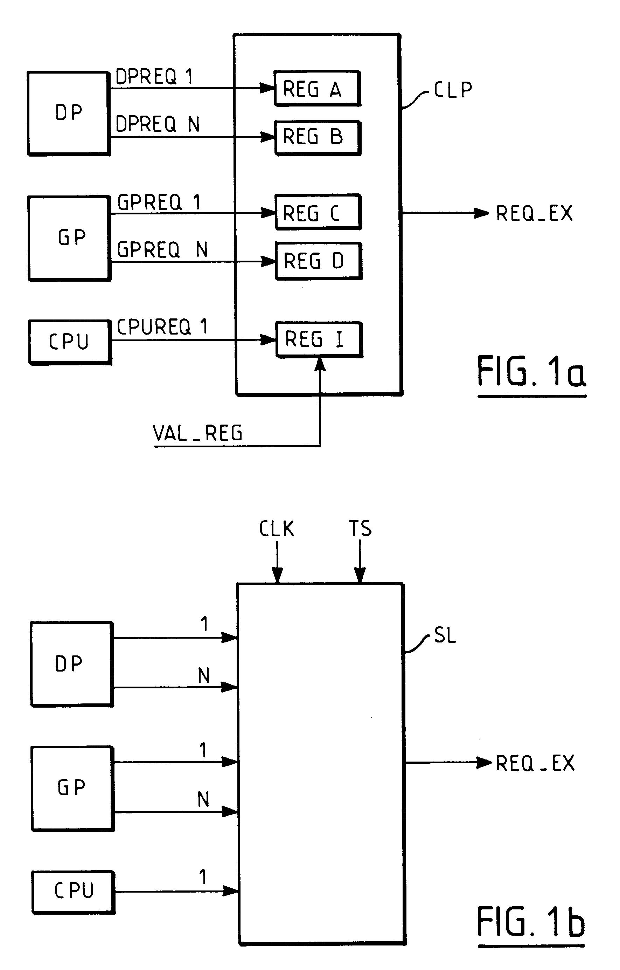

Sur la figure 1b, un système de gestion similaire est représenté; les modules demandeurs comportent encore deux connexions pour formuler séparément chaque type de requête; par contre le système logique de priorité (SL) est constitué d'un système de portes logiques non modifiable du fait qu'il est cablé; les priorités sont donc fixées une fois pour toutes mais il est possible d'agir sur les portes avec un signal de temps par exemple l'horloge (CLK) ou, dans un mode préféré, avec un signal de tranche de temps (TS) adéquatement choisi; le signal TS peut par exemple être représentatif de la période d'affichage et/ou de la période de retour ligne de l'écran d'un système graphique; dans ce cas il est clair pour l'homme du métier que, suivant la période en cours, les divers modules demandeurs d'accès peuvent avantageusement être munis de priorités différentes; il appartient alors à l'homme du métier de disposer les portes logiques en conséquence de ses choix de conception et de fonctionnement du système; le signal TS peut aussi être représentatif du, ou combiné avec, le signal de retour trame; ces exemples de tranche de temps (TS) ne sont évidemment pas limitatifs.

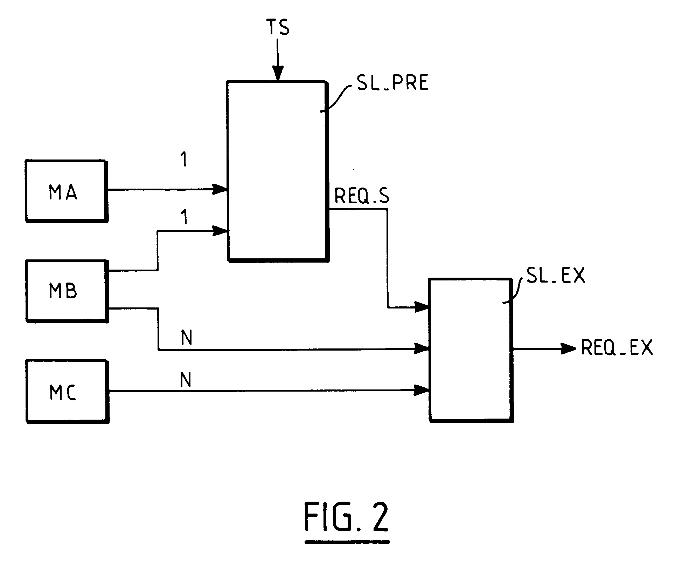

Sur la figure 2 le module d'arbitrage a été scindé en deux parties.

Un premier module (SL-PRE) reçoit et arbitre exclusivement les demandes d'accès à un seul mot pour pré-sélectionner l'une d'elle (REQ-S), laquelle est transmise au deuxième module d'arbitrage; le deuxième module (SL.EX) reçoit et arbitre la dite demande pré-sélectionnée et la/les demande(s) d'accès à plusieurs mots pour élire une demande à exécuter; chacun des deux modules d'arbitrage peut indifféremment être soit programmable, soit cablé comme susdit.

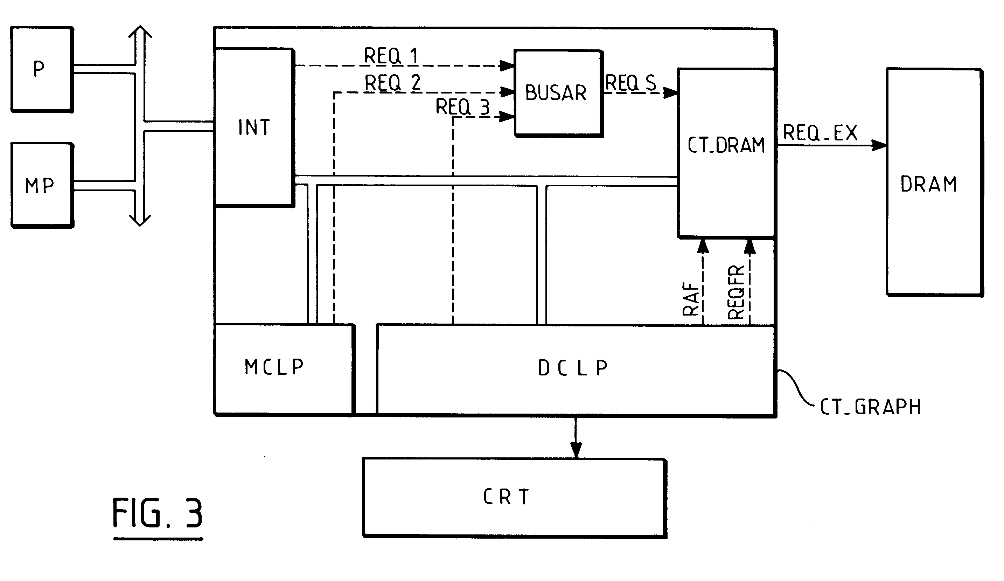

Cette disposition particulière est spécialement performante dans un système graphique tel que montré à la figure 3.

Le système graphique comporte, connectés entre eux par des bus de données, de commande et d'adresse succinctement représentés, un micro-ordinateur de commande constitué d'un micro-processeur (P) avec sa mémoire de programme (MP) pour commander le système, un écran de visualisation graphique (CRT), une mémoire vive dynamique (DRAM) pour mémoriser les mots d'information d'affichage pour les fenêtres des lignes de l'écran, la dite DRAM devant être rafraîchie périodiquement, et un contrôleur graphique (CT-GRAPH) comprenant un interface micro-ordinateur (INT), un processeur graphique (MCLP) et un processeur d'écran (DCLP).

Le susdit premier module d'arbitrage est ici appelé arbitre de bus (BUSAR), il arbitre les requêtes à un seul mot (REQ1, REQ2, REQ3) en provenance du micro-ordinateur (P), du processeur graphique (MCLP) et du processeur d'écran (DCLP), et il pré-sélectionne une requête (REQ.S).

Le susdit deuxième module d'arbitrage est ici intégré dans le contrôleur de DRAM (CT.DRAM), il arbitre la dite requête (REQ.S) et les demandes d'accès en rafale (RAF) à plusieurs mots ainsi que les demandes de rafraîchissement (REQ-FR) en provenance du processeur d'écran (DCLP), et il élit une demande à exécuter (REQ.EX).

Le dispositif ainsi agencé est bien adapté au processus d'affichage des pixels piloté par le DCLP; en effet le dit processus comporte d'une part une lecture préparatoire d'un mot descripteur (REQ.3) dans lequel se trouvent des informations nécessaires à la lecture proprement dite des pixels (RAF); il importe donc de donner une grande priorité à REQ3 pendant la période d'affichage et ceci est possible avec le dispositif décrit en agençant l'arbitre de bus (BUSAR) conformément à la description de la figure 1b.

Le système graphique est ainsi optimisé; ce mode de réalisation n'est pas limitatif et l'homme du métier peut envisager d'autres modes d'implémentation de la présente invention selon les cas particuliers de gestion de priorité d'accès qui se présentent à lui.

## Revendications

1. Système de gestion des priorités d'accès à une mémoire comportant au moins un module demandeur pourvu de moyens pour émettre des demandes d'accès, un module d'arbitrage pour arbitrer entre les dites demandes d'accès et ainsi élire une demande d'accès à exécuter en priorité, caractérisé en ce que chaque module demandeur est pourvu de moyens comportant deux connexions de signaux, pour émettre séparément d'une part les demandes d'accès à un seul mot de la dite mémoire et d'autre part les demandes d'accès à plusieurs mots consécutifs de la dite mémoire, et en ce que le module d'arbitrage est pourvu de moyens pour recevoir et arbitrer les dites demandes d'accès avec des priorités distinctes même si elles émanent du même module demandeur, chaque dite demande d'accès à un seul mot étant utilisée pour la lecture d'un mot dans lequel se trouve des informations nécessaires pour préparer une prochaine lecture correspondante de données, laquelle lecture est l'objet d'une demande d'accès à plusieurs mots consécutifs.

2. Système de gestion selon la revendication 1, caractérisé en ce que les dites priorités distinctes sont programmables, c'est à dire modifiables pendant le fonctionnement du système.

3. Système de gestion selon la revendication 1, caractérisé en ce que les dites priorités distinctes sont pré-programmées, ou cablées, c'est à dire non modifiables pendant le fonctionnement du système.

4. Système de gestion selon les revendications 1, 2 ou 3, caractérisé en ce que le dit module d'arbitrage comporte d'une part un premier module pour arbitrer les demandes d'accès à un seul mot et ainsi pré-sélectionner une telle demande et d'autre part un deuxième module pour arbitrer entre la dite demande pré-sélectionnée et les demandes d'accès à plusieurs mots et ainsi élire une demande d'accès à exécuter.

5. Système de gestion selon les revendications 1, 2, 3 ou 4, la mémoire étant une DRAM nécessitant des rafraîchissements périodiques, caractérisé en ce que le dit module d'arbitrage est aussi pourvu de moyens pour recevoir et arbitrer une demande de rafraîchissement laquelle est arbitrée comme étant une demande d'accès à plusieurs mots.

6. Application du système de gestion selon la revendication 5 à un système graphique comportant un processus d'affichage agencé pour émettre d'une part des demandes d'accès à un seul mot et d'autre part des demandes d'accès à plusieurs mots consécutifs de pixels.

## Claims

1. A system for controlling the priorities of access to a memory, comprising at least one request generator module provided with means for emitting requests for access, an arbitration module to arbitrate between said requests for access and thus to elect a request for access to be executed with priority, characterized in that each request generator module is provided with means comprising two signal connections for separately emitting, on the one hand, the requests for access to a single word of said memory and, on the other hand, the requests for access to a plurality of consecutive words of said memory, and in that the arbitration module is provided with means for receiving and arbitrating said requests for access with distinct priorities, even if they emanate from the same request generator module, each of said demands for access to a single word being used to read a descriptor which permits a preparation of a next, corresponding read-out of data, which read-out is the subject of a demand for access to a plurality of consecutive words.

2. A system for control according to Claim 1, characterized in that said distinct priorities are programmable, that is to say modifiable, during operation of the system.

3. A system for control according to Claim 1, characterized in that said distinct priorities are preprogrammed, or wired, that is to say non-modifiable during operation of the system.

4. A system for control according to Claims 1, 2 or 3, characterized in that the said arbitration module comprises, on the one hand, a first module to arbitrate the requests for access to a single word and thus to preselect such a request and, on the other hand, a second module to arbitrate between said preselected request and the requests for access to a plurality of words and thus to elect a request for access to be executed.

5. A system for control according to Claims 1, 2, 3 or 4, the memory being a DRAM requiring periodic refreshment, characterized in that the said arbitration module is also provided with means for receiving and arbitrating a refresh request which is arbitrated as being a request for access to a plurality of words.

6. Application of the system for control according to Claim 5 to a graphics system with a display process controlled to emit, on the one hand, requests for access to a single word, and on the other hand, requests for access to a plurality of consecutive words of pixels.

## Patentansprüche

1. Bearbeitungssystem für Zugriffsvorrangssteuerung zu einem Speicher, wobei das System wenigstens einen Anfragemodul enthält mit einem Mittel zum Ausgeben von Zugriffsanfragen, und einen Arbitermodul enthält zum Entscheiden zwischen den Zugriffsanfragen und so zum Wählen einer mit Vorrang durchzuführenden Zugriffsanfrage, dadurch gekennzeichnet, daß jeder Anfragemodul mit Mitteln mit zwei Signalverbindungen zum getrennten Ausgehen einerseits der Anfragen für Zugriff zu einem einzigen Wort des Speichers und andererseits der Anfragen für Zugriff zu mehreren aufeinanderfolgenden Wörtern des Speichers versehen ist, und daß der Arbitermodul mit Mitteln zum Empfangen und Beurteilen der Zugriffsanfragen mit den unterschiedenen Prioritäten versehen ist, sogar wenn sie demselben Anfragemodul entstammen, wobei jede Anfrage für Zugriff zu einem einzigen Wort benutzt wird zum Lesen eines (vorbestimmten) Wortes, das die erforderlichen Informationen enthält zum Vorbereiten eines folgenden entsprechenden Datenlesevorgangs, welcher folgende Datenlesevorgang das Ziel einer Anfrage für Zugriff zu mehreren aufeinanderfolgenden Wörtern ist.

2. Bearbeitungssystem nach Anspruch 1, dadurch gekennzeichnet, daß die unterschiedenen Prioritäten programmierbar sind, d.h. änderbar im Betrieb des Systems.

3. Bearbeitungssystem nach Anspruch 1, dadurch gekennzeichnet, daß die unterschiedenen Prioritäten vorprogrammiert oder festverdrahtet sind, d.h. nicht änderbar im Betrtieb des Systems.

4. Bearbeitungssystem nach den Ansprüchen 1, 2 oder 3, dadurch gekennzeichnet, daß der Arbitermodul einerseits einen ersten Modul zum Entscheiden über die Anfragen für Zugriff zu einem einzigen Wort und zum Vorwählen einer derartigen Anfrage, und andererseits einen zweiten Modul zum Entscheiden zwischen der vorgewählten Anfrage und den Anfragen für Zugriff zu mehreren Wörtern und so zum Auswählen einer durchzuführenden Zugriffsanfrage enthält.

5. Bearbeitungssystem nach den Ansprüchen 1, 2, 3 oder 4, wobei der Speicher ein DRAM-Speicher ist, der periodisch aufgefrischt werden muß, dadurch gekennzeichnet, daß der Arbitermodul weiter mit Mitteln zum Empfangen und Beurteilen einer Auffrischanfrage versehen ist, wobei diese Anfrage als eine Anfrage für Zugriff zu mehreren Wörtern bewertet wird.

6. Anwendung des Bearbeitungssystems nach Anspruch 5 in einem graphischen System mit einem Anzeigeverfahren zum Ausgeben einerseits von Anfragen für Zugriff zu einem einzigen Wort und andererseits von Anfragen für Zugriff zu mehreren aufeinanderfolgenden Bildelementwörtern.
